# EUROPÄISCHE PATENTSCHRIFT

(11) **EP 0 424 680 B1**
(45) Veröffentlichungstag und Bekanntmachung des Hinweises auf die Patenterteilung: **29.01.1997**
(21) Anmeldenummer: 90118556.1
(22) Anmeldetag: 27.09.1990
(51) Int. Cl.: B65D 6/32, B65D 8/22, B65D 77/12, B65D 77/20, B29C 65/02

(54) **Kunststoffbehälter mit Verschluss aus Folienmaterial und Verfahren zum Verbinden von Behälterunterteil und Verschlussteil**
Plastic container with foil closure and method for bonding closure to container base
Récipient en plastique avec fermeture sous forme de film et procédé pour fixer la fermeture sur la partie inférieure du récipient

(30) Priorität: 23.10.1989 DE 3935201
(43) Veröffentlichungstag der Anmeldung: 02.05.1991
(73) Patentinhaber: Schmalbach-Lubeca AG, 38112 Braunschweig (DE)
(72) Erfinder: Kroeschell, Frank, D-2857 Langen (DE); Huth, Kurt, D-3302 Cremlingen 2 (DE); Geske, Klaus-Dietrich, D-2740 Bremervörde (DE)
(74) Vertreter: Fricke, Joachim, Dr.

(56) Entgegenhaltungen:
- DE-A- 2 042 937
- DE-U- 8 807 680
- FR-A- 2 478 031
- US-A- 4 350 263

## Beschreibung

Die Erfindung betrifft eine Verpackung mit den Merkmalen des Oberbegriffs des Anspruchs 1, ein Verfahren zu deren Herstellung (Anspruch 13 und Anspruch 14) und eine Siegeleinrichtung zur Herstellung der Verpackung und zum Ausführen des Verfahrens (Anspruch 21).

Es ist durch Benutzung bekannt, daß dosenförmige Verpackungen bisher hauptsächlich zur Aufnahme von pulverförmigem Material oder Trockenprodukten eingesetzt werden. Hierbei besteht der Behälterrumpf häufig aus gewickelten Papier- oder Pappmaterial, das mit sehr engen Toleranzen bezüglich Wanddicke und Durchmesser hergestellt werden kann. Deshalb ist es möglich, den Behälter mit Hilfe einer Folie durch Heißsiegeln zu verschließen. Als Folie wird häufig eine Folie aus Verbundwerkstoff, z.B. Aluminium/Kunststoff verwendet. Da die Randstirnfläche des Behälterteils für eine ausreichende feste und dichte Siegelnaht nicht ausreicht, ist man darauf angewiesen, die Folie U-förmig über den Behälterrand zu legen und mit der Behälter-Innenfläche und/oder der Berhälter-Außenfläche zu versiegeln. Der so verschlossene Behälter kann zusätzlich mit einem wiederverschließbaren Deckel abgedeckt sein.

Bei sehr engen Toleranzen von z.B. unter 0,5 mm für den Durchmesser des Behälterrandes können zur Versiegelung einteilige, in den Behälterrand eintauchende Siegelköpfe verwendet werden. In diesem Fall besteht eine Chance, eine Siegelnaht mit ausreichender Festigkeit und Gasdichtigkeit herzustellen. Bei über 0,5 mm liegenden Maßtoleranzen kann zwar ebenfalls eine Innenversiegelung erreicht werden, jedoch nur mit Hilfe eines spreizbaren Siegeldornes. Mit einem solchen läßt sich zwar ggf. eine ausreichende mechanische Festigkeit erzielen. Es besteht jedoch die Gefahr, daß an den Übergängen der Spreizelemente des Dornes weniger dichte Siegelbreiche entstehen, so daß eine absolute gasdichte Verbindung zwischen den Teilen nicht gewährleistet werden kann.

Hinzu kommt, daß es auch Anwendungen für solche Verpackungen gibt, bei denen der Inahlt einer Sterilisation unterzogen werden muß. In einem solchen Fall muß die Verbindung zwischen den Behälterteilen eine besonders hohe mechanische Festigkeit aufweisen, um die Druckdifferenzen bei der Sterilisation ohne Probleme aufnehmen zu können.

In wiederum anderen Anwendungsbereichen sind ganz besonders hohe Anforderungen an die hermetische Abdichtung gestellt, insbesondere bei sauerstoffempfindlichen Verpackungsgütern.

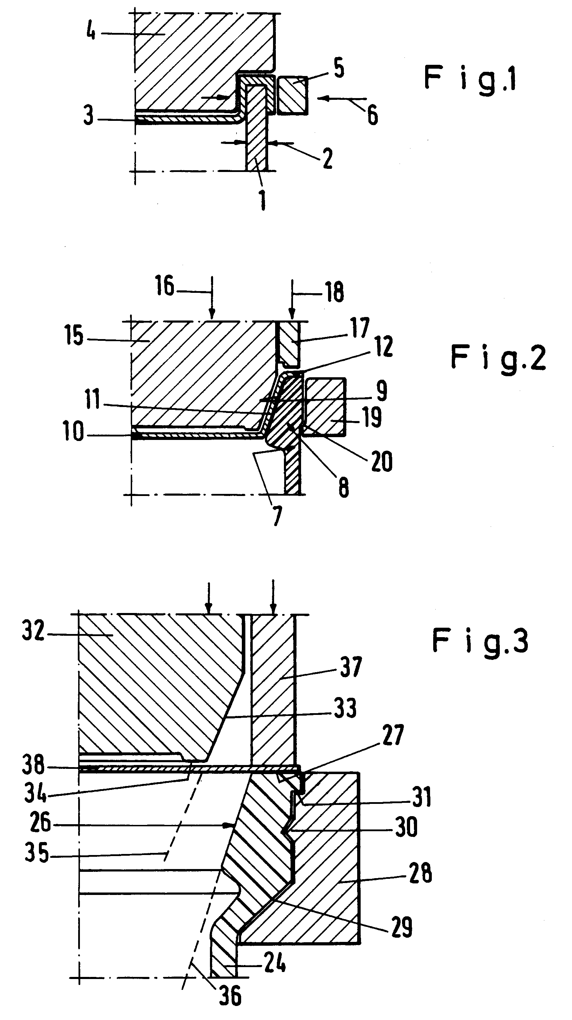

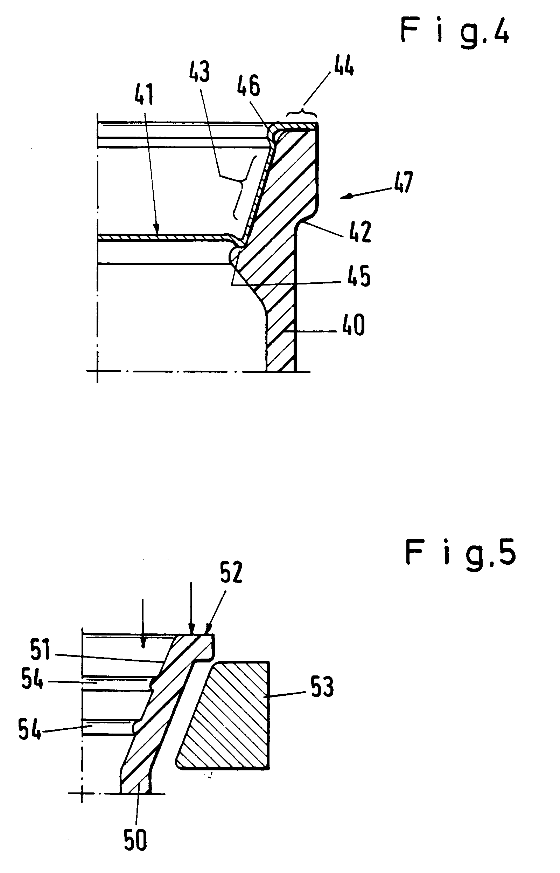

Die Figur 4 der **DE-A-25 40 163** zeigt einen Behälterwandteil, der in einem flachen horizontalen Flansch endet. Der Deckel paßt sich an die Innenseite des Oberteils der Behälterwand sowie über dem horizontalen Flansch der Behälterwand an. Der Deckel besteht aus einem Zweischichten-Laminat, wobei die eine Schicht und eine andere Schicht die innere Schicht bildet, die in Kontakt mit der Behälterwand und dem Flansch steht. So wird ein Behälter mit einer hermetischen Abdichtung geschaffen, der als Abdichtungselement ein Laminat aus wenigstens zwei Schichten aus unterschiedlichen Kunststoff-Materialien, die schwach miteinander verbunden sind, aufweist, so daß die äußerste Schicht oder die äußersten Schichten leicht entfernt und anschließend als Andrückdeckel mit mechanischem Eingriff verwendet werden können, während die innerste Schicht mit dem Behälterrand eine hermetische Abdichtung bildet, die nur dann aufgebrochen wird, wenn der Inhalt des Behälters erreicht werden soll. Der Deckel dieser Ausführungsform im Stand der Technik läßt sich leicht teilweise durch Trennen des Laminats an der schwachen Bindung zwischen den beiden Schichten entfernen. Auf diese Weise geht der auf den Behälter aufgebrachte Deckel **in zwei Einheiten über**. Eine Einheit besteht aus einer einzigen Kunststoffschicht und ist an dem Oberteil des Behälters angeschweißt und hält das Produkt innerhalb des Behälters in einem geeigneten Zustand zurück. Eine zweite Einheit ist wenigstens eine Schicht aus einem Kunststoff, die von dem Behälter entfernt worden ist, und sich als erneut verwendbarer Andrückdeckel - mit mechanisch geeigneter Stabilität - verwenden läßt. Die zugehörige Figur 4 zeigt den Randflansch und einen ganz leicht konischen Randbereich des Behälter-Unterteils, der im oberen Bereich an einer Innenfläche versiegelt ist. Deutlich ist die Neigung der Innenwand zwar in der dortigen Figur 1, dort reicht aber der Deckel nicht über den Randflansch hinaus in das Innere des Behälters, sondern liegt flach auf ihm auf.

Eine andere Ausgestaltung einer konischen Innenfläche, die deutlicher dargestellt ist, ist der **DE-U-88 07 680.6** zu entnehmen, wo ein ebener Randflansch und ein radial innerhalb davon liegender konischer Bereich gezeigt ist. Die Abdeckfolie (dort mit 13 bezeichnet) liegt auf dem ebenen Randflansch als auch auf der konischen Innenfläche auf, um den Behälter so auszubilden, daß Ränder aus Speiseresten beim Erwärmen des Behälters nicht auftreten können und der folienartige Teil am oberen Rand des Behälters dicht versiegelt ist und nach dem Erwärmen und kurz vor dem Servieren entfernt werden kann. Mit einer solchen Gestaltung eines Behälterrandes können Suppen auch in Flugzeugen serviert werden - was damals noch nicht möglich war -, ohne daß Ränder aus Speiseresten beim Servieren einen unappetitlichen Eindruck erwecken.

Es ist **Aufgabe der Erfindung**, eine Verpackung mit den Merkmalen des Oberbegriffs des Anspruchs 1 oder ein Verfahren gemäß dem Oberbegriff der Ansprüche 13 oder 14 so weiterzubilden, daß eine hohe mechanische Verbindungsfestigkeit und eine im besonders hohen Maße hermetische dichte Verbindung erreicht werden kann, auch bei solchen Behältern, bei denen die Randöffnung des Behälter-Unterteils größeren Maßschwankungen von z.B. über 0,5 mm unterworfen sind. Die dazu verwendeten Werkzeuge gemäß Oberbegriff des Anspruchs 21 sollen gleichwohl einfacher Natur sein.

Diese Aufgabe wird gemäß Anspruch 1, Anspruch 13 oder 14 und gemäß Anspruch 21 gelöst.

Durch die Aufteilung der Siegelverbindung auf zwei unterschiedliche Bereiche wird die Möglichkeit erhalten, durch Verfahrensführung und durch geometrische Gestaltung in jedem Siegelbereich den besonderen Augenmerk entweder auf die ausreichende **mechanische** Festigkeit oder aber auf die gasdichte **hermetische** Abdichtung zu konzentrieren. In dem Flächenbereich hoher Festigkeit können Mikrokanäle oder dergleichen toleriert werden, da die hermetische Abdichtung in den anderen Flächenbereichen erfolgt. Bei diesen Flächenbereichen ist nicht erforderlich, daß die gewünschte Druckfestigkeit erreicht wird, sofern dafür gesorgt wird, daß diese hermetisch dichten Bereiche von etwaigen erhöhten Innendrücken durch die anderen Flächenbereiche von höherer Nahtfestigkeit entlastet oder freigehalten werden.

Einer der Verbindungsbereiche ist eine konische Fläche von gegenüber der Behälterachse vorbestimmter Neigung. Dies hat einmal den Vorteil, daß trotz der Siegelung an einer Innenfläche ein ungeteilter Siegelkopf gemäß Anspruch 21 verwendet werden kann, so daß die Gefahr von Mikrokanälen gering gehalten wird. Vor allem aber erhält man dadurch den Vorteil, die gewünschte Siegeleigenschaft in diesem Bereich auch bei größeren Toleranzen, von z.B. über 0,5 mm bis hin zu 2,5 mm erreichen zu können.

Weitere vorteilhafte Eigenschaften ergeben sich aus den abhängigen Ansprüchen 2 bis 12. Das gleiche gilt für die Ausgestaltung des Verfahrens gemäß Anspruch 13 oder Anspruch 14 zur Herstellung der Verpackung, anhand der Ansprüche 15 bis 20.

Die Erfindung wird nachfolgend anhand schematischer Zeichnungen an mehreren Ausführungs**beispielen** näher erläutert.

Es zeigen:
- Figur 1: im Ausschnitt und im Querschnitt eine herkömmliche Verpackung und die zugehörigen Siegelwerkzeuge.
- Figur 2: in gleicher Darstellung wie Figur 1 eine Verpackung gemäß der Erfindung mit den zugehörigen Herstellungswerkzeugen.
- Figur 3: im größeren Maßstabe eine abgewandelte Ausführungsform der Verpackung und eine abgewandelte Art der Herstellung und Versiegelung.
- Figur 4: im Ausschnitt und im vergrößerten Maßstabe einen Schnitt durch eine fest und hermetisch verschlossene Verpackung gemäß der Erfindung.
- Figur 5: eine weiter abgewandelte Ausführungsform der Verpackung.
- Figur 6 und 7: zwei verschiedene Ausführungen eines vorgefertigten Verschlußteils für die Verpackung gemäß der Erfindung und
- Figur 8: in ähnlicher Darstellung wie Figur 3 eine abgewandelte Ausführungsform der Verpackung in Verbindung mit einer abgewandelten Vorrichtung zum hermetischen Verschließen und Versiegeln der Verpackung.

Figur 1 zeigt eine Verpackung aus einem Unterteil 1 mit zylindrischem Rand von geringer Dicke (0,5 bis 3 mm). Der Unterteil wird mit Hilfe einer Folie 3 verschlossen, die eine Verbundfolie aus Aluminium und Kunststoff oder eine Kunststoff-Folie sein kann. Die Verbindung erfolgt durch Heißsiegeln. Zu diesem Zweck ist die Folie mit ihrem Randbereich U-förmig um den offenen Rand des Behälterunterteils 1 gelegt. Die Siegelung erfolgt mit einem Siegelstempel 4 und einem Gegenhalter 5. Wenn die Durchmessertoleranz des Behälters 1 unter 0,5 mm liegt, kann die Siegelung mit Hilfe eines ungeteilten Siegelstempels 4 erfolgen, der mit entsprechend engem Sitz von oben her in die Verpackung gedrückt wird, wobei die Verpackung mit entsprechend engem Sitz von dem Gegenhalter 5 umfaßt wird. Eine solche Arbeitsweise erfordert die Einhaltung sehr enger Maßtoleranzen. Die erreichbaren Siegeldrücke sind begrenzt. Sollen höhere Siegeldrücke erreicht werden oder höhere Toleranzen überwunden werden, so muß der Siegelkopf als Spreizkopf ausgebildet sein. Dies erlaubt zwar in radialer Richtung (6) ausreichend hohe Siegelkräfte auszuüben, eröffnet aber auch die Gefahr, daß zwischen den Spreizelementen Bereiche geringerer Siegelfestigkeit entstehen, in denen Gase wie Sauerstoff durch Mikrokanäle in das Behälterinnere eindringen können. Behälter mit größeren Maßtoleranzen lassen sich mit ausreichender Festigkeit und ausreichender Dichtigkeit auf diese Weise nicht herstellen. Bei Verwendung von Unterteilen, die aus Kunststoff hergestellt sind, müssen erhebliche Maßtoleranzen in Kauf genommen werden. Diese liegen über 0,5 mm und erreichen je nach Material und Öffnungsweise und je nach Schrumpfverhalten des Materials Werte bis z.B. 2,5 mm. Bei solchen Behältern sind Siegelverbindungen derart, wie sie in Figur 1 gezeigt sind,nicht erfolgversprechend.

In Figur 2 ist eine Verpackung gemäß der Erfindung gezeigt. Der Unterteil 7 ist aus Kunststoff hergestellt. An seinem Öffnungsrand 8 ist ein Profil angeformt, das im wesentlichen eine zur Behälterachse schwach geneigte Innenfläche 9 darbietet. An diese schließt sich eine axial weisende Stirnfläche an. An der Außenseite weist der Profilrand 8 eine Schulter auf. Zum Verschließen des Behälters ist eine Form vorgesehen, die zunächst einen bevorzugt geteilten Gegenhalter 19 aufweist, der so angeordnet wird, daß er den profilierten Rand 8 in radialer Richtung von außen einfaßt und mit einer Schulter 20 unter die Außenschulter des Randes 8 greift, so daß der Rand auch in axialer Richtung nach unten abgestützt ist.

Zum Verschließen des Behälters dient eine Einfach- oder Verbundfolie 10. Diese kann vorgeformt sein und weist in diesem Fall eine Vertiefung auf, die durch eine konische Wandfläche 11 begrenzt ist deren Neigung etwa der Neigung der konischen Innenfläche 9 des Randes 8 entspricht. An die konische Wand schließt sich ein etwa rechtwinkelig zur Behälterachse verlaufender Randflansch 12 von geringer Breite an.

Zur Siegelung der beiden Teile ist ein ungeteilter Siegelkopf 15 vorgesehen, der in axialer Richtung gemäß Pfeil 16 in die vertiefte Folie 10 einfährt. Der Siegelkopf 15 wird durch einen zweiten Siegelring 17 umgeben, der ebenfalls in axialer Richtung gemäß Pfeil 18 bewegt wird. In Figur 2 ist angenommen, daß die Siegelwerkzeuge 15 und 17 unabhängig voneinander durch gesonderte Antriebe oder Einrichtungen axial bewegt werden. Es ist ersichtlich, daß beim Einfahren des Siegelkopfes 15 das konische Wandelement 11 unter zunehmendem Druck gegen die Schrägfläche 9 des Randes 8 gedrückt wird. Da der Rand sowohl in axialer als auch in radialer Richtung abgestützt ist, kann er nicht ausweichen sondern nimmt die entsprechenden Siegeldrücke sicher auf, so daß eine Siegelung mit hoher Festigkeit erreicht wird.

Um eine absolut hermetische Abdichtung zu erzielen und Mikrogaskanäle in jedem Fall auszuschließen, wird der Siegelring 17 mit entsprechend hohem Druck auf den schmalen Randflansch 12 aufgesetzt, so daß hier ein zweiter Siegelbereich entsteht, der räumlich und bezüglich seiner geometrischen Gestalt von dem zur Achse schräg verlaufenden Siegelbereich unterschieden ist.

Bei der Anordnung nach Figur 2 ist angenommen, daß man von einem vorgeformten Verschlußteil 10 ausgeht.

Figur 3 zeigt, daß man auch von einem ebenen Folienmaterial 38 ausgehen kann. Dieses wird auf die Stirnfläche 27 des Randes des Behälterunterteils 24 aufgelegt und mit Hilfe des Siegelringes 37 in seiner Lage gehalten. Der profilierte Rand des Behälters 24 wird wiederum durch einen geteilten Gegenhaltering 28 radial nach außen und in axialer Richtung nach unten abgestützt. Dazu können gleichzeitig oder alternativ unterschiedliche formschlüssige Eingriffselemente vorgesehen sein. So kann die Stirnfläche 27 des Randes durch einen kurzen Flansch zur Bildung einer Schulter 31 erweitert sein. Außerdem kann in der Umfangsfläche des Randes eine nach außen offene V-förmige Eingriffsnut sein, in die eine entsprechende Rippe 30 des Gegenhalters 28 formschlüssig eingreift. Schließlich kann der Rand eine schräge Schulter aufweisen, unter die ein entsprechend abgeschrägter Abschnitt 29 des Gegenhalters 28 untergreift. Die zuverlässige Abstützung des Randes durch den Gegenhalter 28 ist für die Zwecke der Erfindung von erheblicher Bedeutung, da hierdurch nicht nur die für das Siegeln erforderlichen Druckkräfte sicher aufgenommen werden, ohne daß der aus relativ dünnem Material bestehende Behälter verformt wird. Vielmehr wird der Behälterrand auch durch den Gegenhalter 28 in seiner Lage zuverlässig fixiert, so daß eine genaue Siegelung möglich ist.

Beim Niederfahren des Siegelkopfes 32 wird die Folie 38 zunächst tiefgezogen, wobei ein Teil der Folie sich an die schräge Innenfläche 26 des Behälterrandes anlegt und durch die entsprechende Schrägfläche 33 am Siegelkopf 37 gegen die Schrägfläche 26 mit dem erforderlichen Siegeldruck gepreßt wird. Zum sicheren Angreifen und Verformen und zur Sicherstellung des erforderlichen Anpreßvorganges weist der Siegelkopf 32 an seiner Unterseite einen ringförmigen Vorsprung oder Wulst 34 auf.

Die Neigung der schrägen Siegelfläche 26 kann zwischen 5° und 30° liegen und sollte vorteilhafterweise zwischen 10° und 20°, insb. bei 15° liegen, wie dies bei 36 in Figur 3 angedeutet ist. Die Neigung 35 der Kegelstumpffläche 33 des Siegelkopfes 32 kann der Neigung 36 der Schrägfläche 26 gleich sein oder geringfügig von dieser abweichen. Wenn eine Abweichung erwünscht ist, sollten die beiden Schrägflächen, wie dies in Figur 3 gezeigt ist, nach unten und zum Behälterinneren leicht divergieren. Es ist wichtig, daß die Schrägfläche 26 quer zur Umfangsrichtung eine ausreichende Flächenausdehnung aufweist, um eine hohe mechanische Festigkeit zu erzielen. Es hat sich als zweckmäßig erwiesen, wenn die axiale Länge der Schrägfläche zwischen etwa 4 und 6 mm liegt.

Eine zweite Siegelung erfolgt mit Hilfe des Siegelringes 37 im Bereich der Stirnfläche 27. Dabei wird angenommen, daß Siegelring 37 und Siegelkopf 32 voneinander unabhängig betätigbar sind. Die Siegelung in der Stirnfläche 27 kann z.B. gleichzeitig mit der Siegelung an der Schrägfläche 26 oder auch nachträglich erfolgen. Im letzteren Fall dient der Siegelring 37 zuvor als Niederhalter für den Rand der Folie 38. Das radiale Ausmaß der Fläche 27 ist im allgemeinen sehr gering und liegt zwischen etwa 1,5 und 3 mm bei einer Rumpfwanddicke von etwa 0,5 bis 1,5 mm. Die Siegelung erfolgt hier durch senkrechten Druck auf die Siegelfläche, so daß ein schmales ringförmiges Siegelband hoher Dichtigkeit erzielt werden kann. Auch hierfür ist wichtig, daß der obere Randbereich durch den Gegenhalter 28 zuverlässig abgestützt und in seiner Lage festgelegt ist.

Figur 4 zeigt eine verschlossene Verpackung gemäß der Erfindung. Man erkennt deutlich die beiden räumlich und geometrisch getrennten Siegelbereiche 43 und 44, von denen der letztere an der axialen Stirnfläche des Behälterunterteils 40 und der zuerst genannte an der konischen Fläche des Behälterrandes 47 vorgesehen ist. Wie Figur 4 außerdem zeigt kann sich am Innenrand der Schrägfläche eine Innenschulter des Behälterrandes in Form eines Wulstes 45 anschließen und es kann der Siegelkopf so ausgebildet sein, daß er mit einer Siegelrippe an der Unterseite die Folie 41 zusätzlich und unter Schaffung einer dritten linienförmigen Siegelzone gegen den Wulst 45 drückt.

Ferner ist in übertriebener Weise in Figur 4 ein membranartiger Übergangsbereich 46 in der Folie zwischen den beiden Siegelzonen 43 und 44 vorgesehen. Dieser Bereich erlaubt eine erhebliche Bewegungsfreiheit zwischen dem der Siegelzone 44 zugeordneten und dem der Siegelzone 43 zugeordneten Wandbereich der Folie. Dieser Bewegungsbereich ermöglicht einen störungsfreien Ausgleich auch erheblicher Maßtoleranzen, die zu einer mehr oder weniger starken Abwärtsbewegung des konischen Folienwandbereiches gegenüber dem Folienrand führen können. Mit 42 ist in Figur 4 eine zur Lagesicherung des Behälterrandes dienende Schulter bezeichnet.

Um die hermetische Abdichtung noch zu fördern und das Entstehen kapillarer Gaskanäle noch besser ausschließen zu können, sind gemäß Figur 5 in der Schrägfläche 51 des Randes des Behälters 50 schmale ringförmige Wülste oder Rippen 54 vorgesehen. Es genügt auch nur eine solche Rippe. Diese erhebt sich nur ganz wenig über die Oberfläche der Schrägfläche 51 und ist in Figur 5 übertrieben groß dargestellt. Beim Einfahren des Siegelkopfes ergeben sich so linienförmig erhöhte Siegeldrücke die linienförmig hermetisch dichte Siegelzonen innerhalb der schrägen Siegelzone 43 in Figur 4 bilden. Diese Rippen oder Wülste 54 und die dadurch bedingten zusätzlichen Siegelzonen sind zusätzlich zu der Siegelzone vorgesehen, die der Stirnfläche 52 des Behälterrandes zugeordnet ist. Mit 53 ist der äußere Gegenhalter angedeutet.

Wie eingangs erwähnt, kann der Verschlußteil vorgeformt sein. Eine solche Form ist aus Figur 2 ersichtlich.

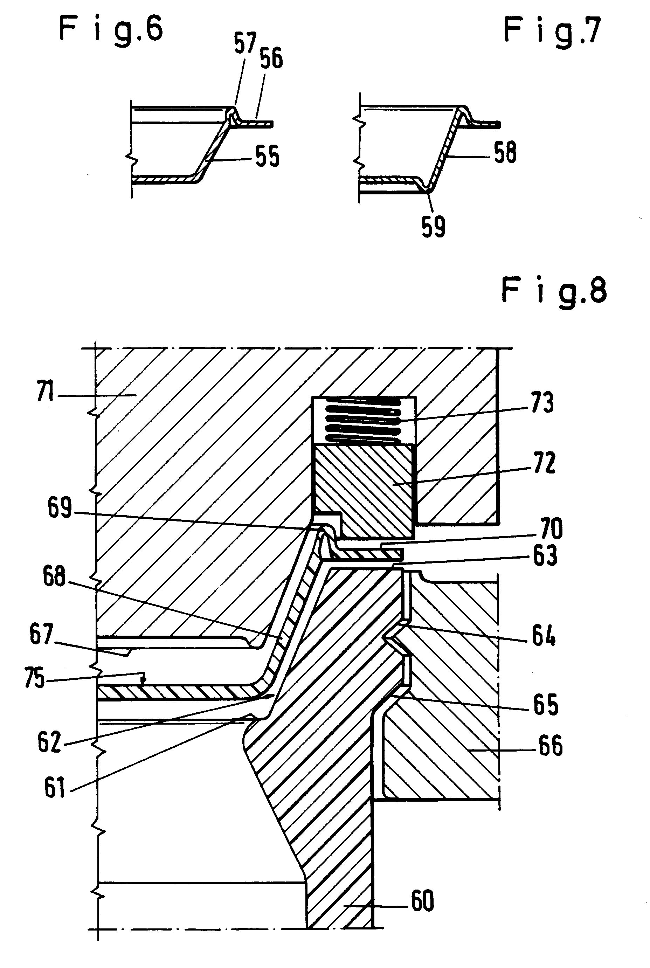

Die Figuren 6 und 7 zeigen zwei weitere Formen für den vorgefertigten Verschlußteil. In beiden Ausführungen ist dieser vertieft ausgebildet und weist einen konischen Wandbereich 55 bzw. 58 von größerer Ausdehnung quer zur Umfangsrichtung auf. In beiden Fällen schließt sich außen ein etwa senkrecht zur Achse des Verschlußteils verlaufender Randflansch 56 an, der mit der Stirnseite des Behälters versiegelt wird. In Figur 6 ist zwischen den beiden Bereichen eine membranartige Ausgleichssicke vorgesehen, die z.B. mit geringerer Wandstärke ausgebildet sein kann und die sich auffaltet, wenn zum Ausgleich größerer Maßtoleranzen der konische Wandteil 55 einen größeren Weg gegenüber dem Randbereich 56 zurücklegen muß.

Bei der Ausführung nach Figur 7 ist eine entsprechende membranartige Sicke 59 zwischen dem konischen Wandteil und dem ebenen Boden des Verschlußteils vorgesehen. Dieser dient z.B. zur Bildung der linienförmigen dritten Siegelzone in Verbindung mit einer Schulter 45 gemäß Figur 4 an der Innenseite des Behälterrandes.

Figur 8 zeigt eine weitere Ausführungsform, ähnlich der nach Figur 3, wobei jedoch von einem vorgeformten Verschlußteil 68, 69, 70 ausgegangen wird. Dieser weist einen konischen Wandteil 68 auf, der über eine membranartige Ausgleichsfalte 69 mit dem Randflansch 70 verbunden ist. Zur Versiegelung des Randflansches 70 mit der Stirnfläche 63 des Behälters 60 dient ein Siegelring 72, der in dem Siegelkopf 71 geführt und gegenüber diesem mittels einer Druckfeder 73 abfedernd gelagert ist. Der Siegelring 72 weist eine Ausnehmung zur Aufnahme der membranartigen Falte 69 auf. Der Siegelkopf 71 weist angrenzend an die konische Fläche eine zusätzliche Siegelrippe 67 auf, welche im Zusammenwirken mit der Innenschulter 61 des Behälters 60 eine linienförmige Siegelzone hoher Dichtigkeit schafft.

Der Behälterrand ist großflächig radial nach außen und axial nach unten durch den geteilten Gegenhalter 66 abgestützt, der einerseits mit einer Rippe in eine Umfangsvertiefung 64 und mit einer Schulter unter eine entsprechende Schrägschulter 65 des Behälterrandes greift.

Wie erwähnt, kann eine Einfachfolie aus Kunststoff oder ein Folienverbundwerkstoff für die Zwecke der Erfindung verwendet werden. Auch eignen sich Folien, die mit einer der bekannten Aufreißmöglichkeiten zum Öffnen der Verpackung versehen sind.

In allen Ausführungen ist der Siegelkopf ungeteilt und kann infolge der Schräglage der einen Siegelzone in Abhängigkeit von dem Schrägneigungswinkel dennoch erhebliche Maßtoleranzen ohne Einbuße hinsichtlich Siegelfestigkeit und hermetischer Abdichtung überbrücken.

Schon allein mit der Verlagerung der Siegelnaht in eine Schrägfläche erhält man gegenüber den bekannten Verpackungen dieser Art sowohl eine dichterte als auch eine festere Naht. Somit reicht diese Maßnahme allein in einigen Fällen schon für eine wesentliche Verbesserung der Verpackung aus. Diese kann noch dichter durch den Wulst in oder am engeren Ende der konischen Siegelnaht gemacht werden, wodurch schon eine gewisse Aufteilung der Nahtfunktionen auf zwei getrennte Bereiche erzielt wird. Mit einer solchen Trennung werden besonders zuverlässige, beanspruchbare Verpackungen erhalten.

Die Erfindung ist besonders gut geeignet, wenn die beiden Teile durch Siegeln, insb. durch Heißsiegeln miteinander verbunden werden sollen. Sie kann bei einfachen, siegelbaren Folien oder Folien oder Tafeln aus einem Verbundwerkstoff mit siegelbarer Oberfläche oder Beschichtung eingesetzt werden.

Es ist aber auch in vorteilhafter Weise möglich, die beiden Teile miteinander zu verschweißen. Wenn z.B. ein Verbundwerkstoff mit einer Aluminiumschicht, insb. -zwischenschicht verwendet wird, kann man die beiden Tile besonders günstig auf dem Wege des Induktionsschweißens miteinander verbinden.

Wenn im Bereich der schrägen oder konischen Verbindungsfläche wenigstens eine schwach nach innen vorspringende Schulter oder Rippe vorgesehen ist, so kann die Verbindung der beiden Teile vorteilhaft auch auf dem Wege des Reibschweißens erfolgen.

Die Erfindung ermöglicht es, übliche parallelwandige Behälter mil einem Kunststoffdeckel oder Kunststoff-Aluminiumdeckel zu versehen und diese Teile fest und dicht miteinander zu verbinden, wenn die in den Ansprüchen angeführten Maßnahmen berücksichtigt werden.

## Patentansprüche

1. Verpackung, bestehend aus einem Behälter (10;7;40;60) aus Kunststoff oder Kunststoff-Verbundmaterial mit einem Öffnungsrand (8;47) und einem Verschlußteil (10;38;41;75) aus siegelbarem oder schweißbarem Verbund- oder Folienmaterial, der durch Siegeln oder Schweißen an zwei Flächenbereichen (43,44,45;11,12; 26,27;51,52;61,62,63) verbunden ist, von denen ein Flächenbereich (11,26,43,51,62) schräg zur Behälterachse verläuft bzw. orientiert ist, **dadurch gekennzeichnet,** daß der eine Flächenbereich (43,11,26,51,62) im wesentlichen die mechanische feste Verbindung und der andere Flächenbereich (44,45,12, 27,52,61,63) im wesentlichen die hermetisch dichte Verbindung schafft.

2. Verpackung nach Anspruch 1, **dadurch gekennzeichnet,** daß der Winkel des einen Flächenbereiches (43,11,26,51,62) zur Behälterachse ein spitzer Winkel zwischen etwa 5° und 30° ist.

3. Verpackung nach Anspruch 1 oder 2, **dadurch gekennzeichnet,** daß der zur Achse des Behälters geneigte (eine) Flächenbereich (43,11,26,51,62) im wesentlichen die mechanisch feste Verbindung schafft.

4. Verpackung nach einem der vorhergehenden Ansprüche, **dadurch gekennzeichnet,** daß der in erster Linie hermetisch dichte Verbindungsbereich in Form einer umlaufenden Nahtlinie (45) oder eines umlaufenden schmalen Nahtbandes (44) mit einer Breite zwischen etwa 1 mm und 3 mm, vorzugsweise von etwa 1,5 mm ausgebildet ist.

5. Verpackung nach Anspruch 4, **dadurch gekennzeichnet,** daß der im wesentlichen hermetisch dichte (andere) Flächenbereich (44,45,12,27,52,63) zur Behälterachse etwa senkrecht ausgerichtet ist und das ihn ergänzende Nahtband (61) in einer zur Behälterachse senkrechten Ebene liegt, die axial zum anderen Flächenbereich versetzt ist (Figuren 4,8).

6. Verpackung nach einem der Ansprüche 1 bis 5, **dadurch gekennzeichnet,** daß die Ausdehnung der konischen Verbindungsfläche (26) in Achsrichtung des Behälters um ein Mehrfaches größer als die Ausdehnung der zur Achse im wesentlichen senkrechten Verbindungsfläche (27) ist.

7. Verpackung nach einem der Ansprüche 1 bis 6, **dadurch gekennzeichnet,** daß der Öffnungsrand (8;47) des Behälters (7;40) profiliert ausgebildet ist und eine an die schmale Stirnfläche (27) des Öffnungsrandes (8;47) anschließende, zum Behälterinneren hin konisch verlaufende innere Randfläche (26) aufweist.

8. Verpackung nach Anspruch 2 bis 7, **dadurch gekennzeichnet,** daß der Verschlußteil (10;38;41;75) vorgeformt ist und einen vertieften Bereich (75) mit konischem Wandabschnitt (43;68; 55;58) und einen zur Achse etwa rechtwinkelig verlaufenden und demgegenüber schmäleren Wandabschnitt (56;70;44) aufweist.

9. Verpackung nach Anspruch 8, **dadurch gekennzeichnet,** daß der konische Wandabschnitt einseitig oder beidseitig einen membranförmigen Ausgleichsabschnitt (57;59;69;46) aufweist, der in den vertieften Bereich (75) oder den rechtwinklig zur Achse verlaufenden Wandabschnitt (56;70;44) übergeht.

10. Verpackung nach einem der vorhergehenden Ansprüche, **dadurch gekennzeichnet,** daß die axiale Ausdehnung der schrägen oder konischen Verbindungsfläche (26) zwischen etwa 3 mm und 6 mm, vorzugsweise bei etwa 4,5 mm liegt.

11. Verpackung nach einem der vorhergehenden Ansprüche, **dadurch gekennzeichnet,** daß in der konischen Verbindungsfläche (51) wenigstens eine durchgehende, schwach nach innen vorspringende Schulter oder Rippe (54) vorgesehen ist.

12. Verpackung nach einem der vorherigen Ansprüche **dadurch gekennzeichnet,** daß am engeren Ende der konischen Verbindungsfläche (62) ein demgegenüber schmaler Abschnitt (61) angeschlossen ist, der annähernd rechtwinklig zur Achse des Behälters (60) verläuft.

13. Verfahren zum mechanisch festen und hermetisch dichten Verbinden eines Behälterunterteils (40,50,7) mit schmalem Rand und eines Verschlußteils (10,38,41,75) aus Folienmaterial nach einem der vorherigen Ansprüche, durch Siegeln, insb. Heißsiegeln oder Schweißen, **dadurch gekennzeichnet,** daß die beiden Teile (40,50,7;10,38,41,75) miteinander an zwei radial auseinanderliegenden Bereichen so verbunden werden, daß der eine Bereich zumindestens die erforderliche mechanische Festigkeit hat und der andere Bereich zumindestens die erforderliche hermetische Dichtigkeit hat.

14. Verfahren zum mechanisch festen und hermetisch dichten Verbinden eines Behälter-Unterteils (7,24,40,50,60) mit schmalem Öffnungsrand (8,47) und eines Verschlußteils (10,38,41,75) aus Folien- oder Verbundmaterial nach einem der Ansprüche 1 bis 12, **dadurch gekennzeichnet,** daß die beiden Teile miteinander an zwei räumlich getrennten und geometrisch unterschiedlichen Siegelbereichen (43;44,45) miteinander verbunden werden, um mit dem einen Bereich großflächiger zumindest die erforderliche mechanische Festigkeit (43) und mit dem anderen Bereich (44,45) zumindest die erforderliche hermetische Dichtigkeit zu erzeugen.

15. Verfahren nach Anspruch 13 oder 14, **dadurch gekennzeichnet,** daß die beiden Teile (7;10) entlang einer zwischen etwa 5° und 30°, vorzugsweise zwischen etwa 10° und 20°, zur Behälterachse geneigten ausgedehnteren Berührungsfläche miteinander heiß versiegelt oder verschweißt werden.

16. Verfahren nach Anspruch 13, 14 oder 15, **dadurch gekennzeichnet,** daß zur Verbesserung der Dichtigkeit die beiden Teile (7...;10...) zusätzlich entlang wenigstens einer linienförmigen Siegelzone im Bereich der mechanisch festen Verbindungszone (43) durch Heißsiegeln oder Schweißen miteinander hermetisch dichtend (54) verbunden werden.

17. Verfahren nach einem der Ansprüche 13 bis 16, **dadurch gekennzeichnet,** daß zwischen den auseinanderliegenden bzw. räumlich getrennten Verbindungsflächen membranartige Dehnungsbereiche (46,69,57) im Verschlußteil (41) ausgebildet sind.

18. Verfahren nach einem der Ansprüche 13 bis 17, **dadurch gekennzeichnet,** daß der Behälterrand (50,40,24) während des Siegelvorgangs von außen sowohl in radialer Richtung als auch in axialer Richtung von unten abgestützt und in seiner Lage fixiert wird (64,65,66;53;42;29,30).

19. Verfahren nach einem der Ansprüche 13 bis 18, **dadurch gekennzeichnet,** daß ein Verbundmaterial mit einer Aluminium-Zwischenschicht verwendet wird und die beiden Teile (7,...;10,...) durch Induktionsschweißen miteinander verbunden werden.

20. Verfahren nach einem der Ansprüche 13 bis 19, **dadurch gekennzeichnet,** daß in der konischen Verbindungsfläche (62,9,43,26) wenigstens eine durchgehende, schwach nach innen vorspringende Schulter oder Rippe ausgebildet wird und die Verbindung durch Reibschweißen erfolgt.

21. Siegeleinrichtung mit einem Siegeldorn (15,32,71) zur Herstellung einer versiegelten Verpackung nach einem der Ansprüche 1 bis 12 oder zur Ausführung des Verfahrens nach einem der Ansprüche 13 bis 20 mit zumindest zwei Siegelbereichen zur Siegelung eines Verschlußteiles (10,38,41,75) auf/an einen Öffnungsrand (8,47) eines Behälter-Unterteils (11,26,43,41,62), wobei einer der Siegelbereiche schräg zur Achse des Siegeldornes (15,32,71) verläuft,
**dadurch gekennzeichnet,**
(a) daß der Siegeldorn (15,32,71) nicht spreizbar und ungeteilt ist und eine relativ großflächige konische erste Siegelfläche (33) aufweist, die nach radial außen weist;
(b) daß ein gegenüber dem Siegeldorn (15,32,71) axialbeweglicher (18,73) Siegelring (72,17) den zweiten Siegelbereich als ringförmige Siegelzone (27;70) trägt, die in einer Ebene angeordnet ist, die etwa senkrecht zur Achse des Siegeldorns (15,32,71) verläuft.

22. Siegeleinrichtung nach Anspruch 21, bei der
(a) eine linienförmige Siegelzone (34,67) radial innerhalb der konischen Siegelfläche (33) am Siegeldorn vorgesehen ist; und/oder
(b) die ringförmige Siegelzone (27;70) als schmale, ringförmige Stirnfläche (27) radial außerhalb der konischen Siegelfläche (33) ausgebildet ist.

23. Siegeleinrichtung nach Anspruch 21 oder 22, die zwischen beiden Siegelbereichen (33;70,27) eine ringförmige Ausnehmung hat zur Aufnahme eines Ausgleichs-Membranabschnitts (69) beim Siegeln.

## Claims

1. A package comprising a plastics material or composite plastics material container (10; 7; 40; 60) having an opening edge (8; 47) and a closure part (10; 38; 41; 75) made of sealable or weldable composite or sheet material connected by sealing or welding at two surface regions (43, 44, 45; 11, 12; 26, 27; 51, 52; 61, 62, 63), one region (11, 26, 43, 51, 62) extending or being guided at an angle to the container axis, **characterised in that** one surface region (43, 11, 26, 51, 62) basically constitutes the firm mechanical connection and the other surface region (44, 45, 12, 27, 52, 61, 63) basically constitutes the sealing-tight connection.

2. A package according to claim 1, **characterised in that** the angle of one surface region (43, 11, 26, 51, 62) to the container axis is an acute angle between about 5° and 30°.

3. A package according to claim 1 or claim 2, **characterised in that** the (one) surface region (43, 11, 26, 51, 62) at an angle to the container axis substantially constitutes the firm mechanical connection.

4. A package according to any one of the preceding claims, **characterised in that** the mainly sealing-tight connecting region is in the form of a peripheral seam line (45) or a peripheral narrow seam band (44) having a width between about 1 mm and 3 mm, preferably about 1.5 mm.

5. A package according to claim 4, **characterised in that** the substantially sealing-tight (other) surface region (44, 45, 12, 27, 52, 63) is approximately at right angles to the container axis and the supplementary seam band (61) lies in a plane at right angles to the container axis and axially offset from the other surface region (Figures 4, 8).

6. A package according to any one of claims 1 to 5, **characterised in that** the extent of the conical connecting region (26) in the axial direction of the container is several times greater than the extent of the connecting region (27) substantially at right angles to the axis.

7. A package according to any one of claims 1 to 6, **characterised in that** the opening edge (8; 47) of the container (7; 40) is profiled and has an inner surface (26) which adjoins the narrow end face (27) of the opening edge (8; 47) and extends conically towards the interior of the container.

8. A package according to claims 2 to 7, **characterised in that** the closure part (10; 38; 41; 75) is preformed and has a recessed region (75) with a conical wall portion (43; 68; 55; 58) and a narrower wall portion (56; 70; 44) extending approximately at right angles to the axis.

9. A package according to claim 8, **characterised in that** the conical wall portion, on one or both sides, has a diaphragm-like compensating portion (57; 59; 69; 46) which merges into the recessed region (75) or into the wall portion (56; 70; 44) extending at right angles to the axis.

10. A package according to any one of the preceding claims, **characterised in that** the axial extent of the sloping or conical connecting region (26) is between about 3 mm and 6 mm, preferably about 4.5 mm.

11. A package according to any one of the preceding claims, **characterised in that** at least one continuous, slightly inwardly projecting shoulder or rib (54) is provided in the conical connecting region (51).

12. A package according to any one of the preceding claims, **characterised in that** a narrower portion (61) adjoins the small end of the conical connecting region (62) and extends approximately at right angles to the axis of the container (60).

13. A method of firmly and sealing-tightly mechanically joining a bottom part (40, 50, 7) of a container having a narrow edge to a closure part (10, 38, 41, 75) made of sheet material according to any one of the preceding claims, by sealing, especially hot sealing or welding, **characterised in that** the two parts (40, 50, 7; 10, 38, 41, 75) are so interconnected at two radially apart regions that one region has at least the required mechanical strength and the other region has at least the required sealing-tightness.

14. A method of firmly and sealing-tightly mechanically joining a bottom part (7, 24, 40, 50, 60) of a container having a narrow opening edge (8, 47) to a closure part (10, 38, 41, 75) made of sheet or composite material according to any one of claims 1 to 12, **characterised in that** the two parts are connected together at two spatially separated and differently-shaped sealing regions (43; 44, 45) so as to obtain at least the required mechanical strength (43) in the larger-area region and at least the required sealing-tightness in the other region (44, 45).

15. A method according to claim 13 or claim 14, **characterised in that** the two parts (7; 10) are hot-sealed or welded together along a relatively extensive contact surface inclined between about 5° and 30°, preferably between about 10° and 20°, to the container axis.

16. A method according to claim 13, 14 or 15, **characterised in that** in order to improve the sealing-tightness the two parts (7...; 10...) are additionally connected in sealing-tight manner (54) by hot sealing or welding along at least one linear sealing zone in the neighbourhood of the firm mechanically connecting zone (43).

17. A method according to any one of claims 13 to 16, **characterised in that** diaphragm-like expansion regions (46, 69, 57) in the closure part (41) are formed between the apart or spatially separate connecting surfaces.

18. A method according to any one of claims 13 to 17, **characterised in that** during the sealing process the container edge (50, 40, 24) is supported from beneath both in the radial direction and in the axial direction and is secured in position (64, 65, 66; 53; 42; 29, 30).

19. A method according to any one of claims 13 to 18, **characterised in that** a composite material having an aluminum intermediate layer is used and the two parts (7,...; 10,...) are connected by induction welding.

20. A method according to any one of claims 13 to 19, **characterised in that** at least one continuous, slightly inwardly projecting shoulder or rib is formed in the conical connecting surface (62, 9, 43, 26) and the connection is made by friction welding.

21. A sealing device comprising a sealing mandrel (15, 32, 71) for producing a sealed package according to any one of claims 1 to 12 or for working the method according to any one of claims 13 to 20, comprising at least two sealing regions for sealing a closure part (10, 38, 41, 75) on/to an opening edge (8, 47) of a bottom part (11, 26, 43, 41, 62) of a container, one of the sealing regions extending at an angle to the axis of the sealing mandrel (15, 32, 71),
**characterised in that**
(a) the sealing mandrel (15, 32, 71) is not expandable and not divided and has a relatively large-area conical first sealing surface (33) extending radially outwards, and
(b) a sealing ring (72, 17) axially movable (18, 73) relative to the sealing mandrel (15, 32, 71) bears the second sealing region in the form of an annular sealing zone (27; 70) which is situated in a plane extending approximately at right angles to the axis of the sealing mandrel (15, 32, 71).

22. A sealing device according to claim 21, wherein
(a) a linear sealing zone (34, 67) is provided radially on the sealing mandrel inside the conical sealing surface (33); and/or
(b) the annular sealing zone (27, 70) is in the form of a narrow annular end face (27) radially outside the conical sealing surface (33).

23. A sealing device according to claim 21 or claim 22, which has an annular recess between the two sealing regions (33; 70, 27) for receiving a compensating diaphragm portion (69) during the sealing process.

## Revendications

1. Conditionnement constitué d'un récipient (10; 7; 40; 60) en matière plastique ou en matière composite à base de matière plastique, comportant un bord d'ouverture (8; 47) et une partie de fermeture (10; 38; 41; 75) constituée d'une matière en feuille composite ou simple scellable ou soudable, qui est raccordée par scellage ou soudage sur deux zones de surface (43, 44, 45; 11, 12; 26, 27; 51, 52; 61, 62, 63), dont l'une (11, 26, 43, 51, 62) s'étend ou est orientée en oblique par rapport à l'axe du récipient, caractérisé en ce que la première zone de surface (43, 11, 26, 51, 62) assure en substance la liaison mécanique solide et l'autre ou deuxième zone de surface (44, 45, 12, 27, 52, 61, 63) assure la liaison hermétiquement étanche.

2. Conditionnement selon la revendication 1, caractérisé en ce que l'angle de la première zone de surface (43, 11, 26, 51, 62) par rapport à l'axe du récipient est un angle aigu entre environ 5 et 30°.

3. Conditionnement selon la revendication 1 ou 2, caractérisé en ce que la (première) zone de surface (43, 11, 26, 51, 62) inclinée par rapport à l'axe du récipient assure en substance la liaison mécaniquement solide.

4. Conditionnement selon l'une quelconque des revendications précédentes, caractérisé en ce que la zone de liaison en premier lieu hermétiquement étanche se présente sous la forme d'une ligne de jonction périphérique (45) ou d'une bande de jonction (44) étroite périphérique d'une largeur comprise entre environ 1 mm et 3 mm, de préférence d'environ 1,5 mm.

5. Conditionnement selon la revendication 4, caractérisé en ce que la (deuxième) zone de surface (44, 45, 12, 27, 52, 63) en substance hermétiquement étanche est orientée plus ou moins perpendiculairement à l'axe du récipient et la bande de jonction (61) qui la complète se trouve dans un plan perpendiculaire à l'axe du récipient, ledit plan étant décalé axialement de l'autre zone de surface (Fig. 4, 8).

6. Conditionnement selon l'une quelconque des revendications 1 à 5, caractérisé en ce que l'extension de la surface de liaison conique (26) dans la direction axiale du récipient est plus grande d'un multiple que l'extension de la surface de liaison (27) sensiblement perpendiculaire à l'axe.

7. Conditionnement selon l'une quelconque des revendications 1 à 6, caractérisé en ce que le bord d'ouverture (8; 47) du récipient (7; 40) a une forme profilée et présente une surface de bord interne (26) s'étendant en cône vers l'intérieur du récipient et se raccordant à la surface frontale étroite (27) du bord d'ouverture (8; 47).

8. Conditionnement selon les revendications 2 à 7, caractérisé en ce que la partie de fermeture (10; 38; 41; 75) est préformée et présente une zone en creux (75) avec une section de paroi conique (43; 68; 55; 58) et une section de paroi (56; 70; 44) s'étendant plus ou moins à angle droit vis-à-vis de l'axe et plus étroite par rapport à la première section.

9. Conditionnement selon la revendication 8, caractérisé en ce que la section de paroi conique présente, sur un côté ou sur les deux, une section de compensation (57; 59; 69; 46) en forme de membrane, qui se fond dans la zone en creux (75) ou dans la section de paroi (56; 70; 44) s'étendant à angle droit avec l'axe.

10. Conditionnement selon l'une quelconque des revendications précédentes, caractérisé en ce que l'extension axiale de la surface de liaison (26) oblique ou conique se situe entre environ 3 et 6 mm, de préférence à environ 4,5 mm.

11. Conditionnement selon l'une quelconque des revendications précédentes, caractérisé en ce qu'il est prévu, dans la surface de liaison conique (51), au moins un épaulement ou une nervure continu(e) (54) faisant saillie légèrement vers l'intérieur.

12. Conditionnement selon l'une quelconque des revendications précédentes, caractérisé en ce que, à l'extrémité plus étroite de la surface de liaison conique (62), est raccordée une section (61) plus étroite vis-à-vis de celle-ci, qui s'étend approximativement à angle droit avec l'axe du récipient (60).

13. Procédé de liaison mécaniquement solide et hermétiquement étanche d'une partie inférieure de récipient (40, 50, 7), pourvue d'un bord étroit, et d'une partie de fermeture (10, 38, 41, 75) constituée d'une matière en feuille selon l'une quelconque des revendications précédentes, caractérisé en ce que les deux parties (40, 50, 7; 10, 38, 41, 75) sont reliées l'une à l'autre en deux zones espacées radialement de sorte que la première zone ait au moins la solidité mécanique requise et que l'autre zone ait au moins l'étanchéité hermétique requise.

14. Procédé de liaison mécaniquement solide et hermétiquement étanche d'une partie inférieure de récipient (7, 24, 40, 50, 60), pourvue d'un bord d'ouverture étroit (8, 47), et d'une partie de fermeture (10, 38, 41, 75) constituée d'une matière en feuille ou d'une matière composite selon l'une quelconque des revendications 1 à 12, caractérisé en ce que les deux parties sont reliées l'une à l'autre en deux zones de scellage (43; 44, 45) séparées spatialement et géométriquement différentes, pour obtenir avec la première zone (43) de plus grande surface au moins la solidité mécanique requise et avec l'autre zone (44, 45) au moins l'étanchéité hermétique requise.

15. Procédé selon la revendication 13 ou 14, caractérisé en ce que les deux parties (7; 10) sont scellées à chaud ou soudées l'une avec l'autre le long d'une surface de contact étendue inclinée d'environ 5 à 30°, de préférence de 10 à 20°, par rapport à l'axe du récipient.

16. Procédé selon la revendication 13, 14 ou 15, caractérisé en ce que, pour améliorer l'étanchéité, les deux parties (7...; 10...) sont également reliées l'une à l'autre de manière hermétiquement étanche (54) par scellage à chaud ou soudage le long d'au moins une zone de scellage linéaire dans la zone de la partie de liaison mécaniquement solide (43).

17. Procédé selon l'une quelconque des revendications 13 à 16, caractérisé en ce que des zones d'extension en forme de membrane (46, 69, 57) sont formées dans la partie de fermeture (41), entre les surfaces de liaison espacées ou séparées spatialement.

18. Procédé selon l'une quelconque des revendications 13 à 17, caractérisé en ce que le bord (50, 40, 24) du récipient est appuyé d'en bas, au cours de l'opération de scellage effectuée de l'extérieur autant dans la direction radiale que dans la direction axiale et fixé dans sa position (64, 65, 66; 53; 42; 29, 30).

19. Procédé selon l'une quelconque des revendications 13 à 18, caractérisé en ce qu'on utilise une matière composite avec une couche intermédiaire d'aluminium et les deux parties (7,...; 10,...) sont reliées l'une à l'autre par soudage par induction.

20. Procédé selon l'une quelconque des revendications 13 à 19, caractérisé en ce que la surface de liaison conique (62, 9, 43, 26) présente au moins un épaulement ou une nervure continu(e) saillant légèrement vers l'intérieur et la liaison se fait par soudage par friction.

21. Dispositif de scellage comportant un mandrin de scellage (15, 32, 71) pour produire un conditionnement scellé selon l'une quelconque des revendications 1 à 12 ou pour réaliser le procédé selon l'une quelconque des revendications 13 à 20, comportant au moins deux zones de scellage pour sceller une partie de fermeture (10, 38, 41, 75) sur un bord d'ouverture (8, 47) d'une partie inférieure (11, 26, 43, 41, 62) de récipient, une des zones de scellage s'étendant en oblique par rapport à l'axe du mandrin de scellage (15, 32, 71),
caractérisé en ce que :
(a) le mandrin de scellage (15, 32, 71) n'est pas élargissable ni divisé et présente une première surface de scellage conique (33) relativement grande, qui s'étend radialement vers l'extérieur, et
(b) un anneau de scellage (72, 17) déplaçable axialement (18, 73) vis-à-vis du mandrin de scellage (15, 32, 71) porte la deuxième zone de scellage sous la forme d'une zone de scellage annulaire (27; 70), qui est agencée dans un plan qui s'étend plus ou moins perpendiculairement à l'axe du mandrin de scellage (15, 32, 71).

22. Dispositif de scellage selon la revendication 21, dans lequel :
(a) une zone de scellage linéaire (34, 67) est prévue radialement à l'intérieur de la surface de scellage conique (33) sur le mandrin de scellage, et/ou
(b) la zone de scellage annulaire (27; 70) se présente sous la forme d'une surface frontale annulaire étroite (27) disposée radialement à l'extérieur de la surface de scellage conique (33).

23. Dispositif de scellage selon la revendication 21 ou 22, qui présente un évidement annulaire entre les deux zones de scellage (33; 70, 27) pour recevoir une section à membrane de compensation (69) lors du scellage.
